# EUROPEAN PATENT SPECIFICATION

(11) **EP 2 169 849 B1**
(45) Date of publication and mention of the grant of the patent: **13.03.2013**
(21) Application number: 08773155.0
(22) Date of filing: 10.07.2008
(51) Int. Cl.: H04W 36/00, H04W 8/26

(54) **ACCESS NETWORK SWITCHING METHOD, ANCHOR MANAGEMENT DEVICE, AND MOBILE ACCESSING DEVICE**
ZUGANGSNETZ-VERMITTLUNGSVERFAHREN, ANKERVERWALTUNGSEINRICHTUNG UND MOBILZUGANGSEINRICHTUNG
PROCÉDÉ DE COMMUTATION DE RÉSEAU D'ACCÈS, DISPOSITIF DE GESTION D'ANCRAGE, ET DISPOSITIF D'ACCÈS MOBILE

(30) Priority: 12.07.2007 CN 200710137421; 07.12.2007 CN 200710195947
(43) Date of publication of application: 31.03.2010
(73) Proprietor: Huawei Technologies Co., Ltd., Longgang District, Shenzhen Guangdong 518129 (CN)
(72) Inventor: YIN, Yu, Guangdong 518129 (CN); HU, Ying, Guangdong 518129 (CN); WANG, Shanshan, Guangdong 518129 (CN)
(74) Representative: Pfenning, Meinig & Partner GbR
(86) International application number: PCT/CN2008/071601
(87) International publication number: WO 2009/006848

(56) References cited:
- CN-A- 1 432 258
- CN-A- 1 984 436
- Ericsson: "Discussion on PDN SAE GW identity registration in HSS", 3GPP TSG SA WG2 , 30 March 2007 (2007-03-30), pages 1-4, XP002611729, Retrieved from the Internet: URL:http://www.3gpp.org/ftp/tsg_sa/WG2_Arc h/TSGS2_56c-AH-Warsaw/Docs/ [retrieved on 2010-11-26]
- ERICSSON: "PDN GW selection for host based mobility", 3GPP DRAFT; S2-072516_CMIP_PDN_GW_SELECTION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070619, 19 June 2007 (2007-06-19), XP050260113, [retrieved on 2007-06-19]
- QUALCOMM EUROPE: "PDN GW selection for S2c host-based mobility", 3GPP DRAFT; S2-072407 PDNGW ALLOCATION FOR S2C, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070619, 19 June 2007 (2007-06-19), XP050260029, [retrieved on 2007-06-19]

## Description

### Field of the Invention

The present invention relates to mobile communications, and in particular, to an access network handover method, an anchor management device, and a mobile access device.

### Background of the Invention

Currently, the radio communication network defined by the 3rd Generation Partnership Project (3GPP) standardization organization is typically composed of a 3GPP Radio Access Network (RAN) and a 3GPP radio core network.

The 3GPP System Architecture Evolution (SAE) network supports the 3GPP access technology, the non-3GPP access technology, and mobility between heterogeneous access networks. In an SAE network, the Packet Data Network Gateway (PDN GW) allocates an IP address to a User Equipment (UE). To support mobility of the UE between heterogeneous RANs, the SAE network uses the PDN GW as an anchor device for handover between heterogeneous systems. A network element such as a Home Subscriber Sever (HSS) or an Authentication, Authorization and Accounting (AAA) server manages information about the anchor currently used by the UE.

When the UE is handed over from one access network to another, a Mobility Management Entity (MME) obtains the anchor currently used by the UE from the HSS or AAA server, and uses the anchor as a target anchor connected to the new data channel. In this way, as long as the UE uses the same anchor to access the data packet network before and after the handover, the same IP address is allocated, and the continuity of the data service is realized. Currently, the SAE network uses a Mobile IP (MIP) protocol to implement mobility between heterogeneous networks.

For example, the UE moves from an Evolved Universal Mobile Telecommunications System (UMTS) Terrestrial Radio Access Network (E-UTRAN) to a Wireless Local Area Network (WLAN). After the UE sets up a connection at the E-UTRAN successfully, the UE stores the Home Address (HA) of the used PDN GW, namely, the HA of the MIP protocol, into the HSS or AAA server. When the UE is handed over to a WLAN, a Proxy Mobility Agent (PMA) obtains the stored HA of the PDN GW from the HSS or AAA server, and sends a Proxy Mobile Internet Protocol (PMIP) registration request to the PDN GW to set up a PMIP tunnel with the PDN GW. In this way, the IP connection of the UE between the WLAN and the PDN GW is set up. Because the UE uses the same IP address to set up a PMIP tunnel with the PDN GW before and after the handover, the continuity of the data service is realized.

In the prior art described above, the same mobility management protocol, namely, Mobile Internet Protocol (MIP), is used for handover between heterogeneous access networks. If the 3GPP access technology supports a General Packet Radio Service (GPRS) Tunnel Protocol (GTP), the handover between heterogeneous access networks involves handover between different management protocols, for example, handover between a GTP protocol and a MIP protocol.

The GTP Control Plane (GTP-C) address of the PDN GW is stored in the HSS or AAA server if the GTP protocol is used for setting up a service connection. In this case, for the MIP protocol, the HA of the PDN GW is stored in the HSS or AAA server. The HA is a network address identical with the service address allocated to the UE, and is a user-plane address. The HA of the PDN GW and the GTP-C are generally two different addresses on the PDN GW.

In the process of implementing the present invention, the inventor finds at least the following defect in the prior art: The prior art is unable to realize continuity of the data service when the UE is handed over between networks of different mobility management protocols.

Standard 3GPP TSG SA WG2 "Discussion on PDN SAE GW identity registration in HSS" is a closest prior art. 3GPP TSG SA WG proposed to store the selected PDN GW in the HSS per user and provide said identity as part of the user's profile to the control plane entities (e.g. MME, AAA) when the user attaches to a new access, without performing an additional PDN GW selection procedure.

### Summary of the Invention

Embodiments of the present invention provide an access network handover method, an anchor management device, and a mobile access device to maintain continuity of data services when a UE is handed over between access networks of different mobility management protocols.

An access network handover method provided in an embodiment of the present invention includes:
when a UE moves from a first network based on a first mobility management protocol to a second network based on a second mobility management protocol, by an access GW or an MME, obtaining an anchor address corresponding to the second mobility management protocol, where the anchor address corresponding to the second mobility management protocol indicates an anchor device used by the UE in the first network; and
using the second mobility management protocol to set up a connection from the access GW or the MME to the anchor device indicated by the anchor address corresponding to the second mobility management protocol according to the anchor address corresponding to the second mobility management protocol, wherein the anchor addresses corresponding to the mobility management protocols are the anchor domain names, and the step of setting up the connection from the access GW or the MME to the anchor device indicated by the anchor address corresponding to the second mobility management protocol comprises: selecting, by the MME or the access GW, a mobility management protocol as the second mobility management protocol according to their own configuration or policy, resolving the anchor domain name to obtain an anchor IP address corresponding to the second mobility management protocol, and setting up the connection to the anchor device indicated by the IP address.

An anchor management device provided in an embodiment of the present invention includes:
a receiving unit, adapted to receive anchor addresses of an anchor device currently used by a UE, where the anchor addresses correspond to mobility management protocols and are the anchor domain names;
a storing unit, adapted to: record anchor information of the anchor device, and update the anchor information according to the anchor addresses that are received by the receiving unit and correspond to the mobility management protocol, where the anchor information includes the anchor addresses of the anchor device and the anchor addresses correspond to multiple mobility management protocols;
a selecting unit, adapted to select an anchor address of the anchor device among the anchor addresses received by the receiving unit, where the selected anchor address corresponds to a mobility management protocol used by the network to which the UE is handed over; and
a sending unit, adapted to send the anchor address selected by the selecting unit to a Mobility Management Entity ,MME, wherein the MME selects a mobility management protocol as the mobility management protocol used by a network to which the UE is handed over according to their own configuration or policy, resolves the anchor domain name to obtain an anchor IP address corresponding to the selecting mobility management protocol, and sets up the connection to the anchor device indicated by the IP address.

A mobile access device provided in an embodiment of the present invention includes:
an obtaining unit, adapted to obtain anchor addresses of an anchor device currently used by a UE, where the anchor addresses correspond to mobility management protocols and are the anchor domain names;
a selecting unit, adapted to select an anchor address of the anchor device among the anchor addresses obtained by the obtaining unit, where the selected anchor address corresponds to a mobility management protocol used by the network to which the UE is handed over; and
a connection setup unit, adapted to set up a connection by using the corresponding mobility management protocol according to the anchor address selected by the selecting unit,
wherein selecting an anchor address of the anchor device among the anchor addresses obtained by the obtaining unit, and setting up a connection by using the corresponding mobility management protocol according to the anchor address selected by the selecting unit comprises: selecting a mobility management protocol as the mobility management protocol used by a network to which the UE is handed over according to their own configuration or policy, resolving the anchor domain name to obtain an anchor IP address corresponding to the selecting mobility management protocol, and setting up the connection to the anchor device indicated by the IP address.

An access network handover system provided in an embodiment of the present invention includes: a first network based on a first mobility management protocol, a second network based on a second mobility management protocol, an access GW connected to the first network, and an MME connected to the second network.

When a UE moves from the first network to the second network, the MME obtains the anchor address corresponding to the second mobility management protocol, and the anchor address corresponding to the second mobility management protocol indicates the anchor device used by the UE in the first network; moreover, the MME uses the second mobility management protocol to set up a connection from the MME to the anchor device indicated by the anchor address corresponding to the second mobility management protocol according to the anchor address corresponding to the second mobility management protocol, wherein the anchor addresses corresponding to the mobility management protocols are the anchor domain names, and the step of setting up the connection from the MME to the anchor device according to the anchor address corresponding to the second mobility management protocol comprises: selecting a mobility management protocol as the second mobility management protocol according to their own configuration or policy, resolving the anchor domain name to obtain an anchor IP address corresponding to the second mobility management protocol, and setting up the connection to the anchor device indicated by the IP address.

Through the access network handover method, anchor management device, and mobile access device in the embodiments of the present invention, the anchor management device stores anchor addresses of the anchor device, and the anchor addresses correspond to multiple different mobility management protocols. When the UE is handed over from a network based on one mobility management protocol to a network based on another mobility management protocol, the anchor management device provides the UE with an anchor address of the anchor device, and this anchor address corresponds to another mobility management protocol. According to the anchor address, a connection from the UE to the access network is set up. Therefore, the continuity of the data service is still maintained when the UE is handed over between the access networks based on different mobility management protocols.

### Brief Description of the Drawings

FIG. 1 is a signaling flowchart of an access network handover method according to a first embodiment of the present invention;
FIG. 2 is a signaling flowchart of an access network handover method according to a second embodiment of the present invention; and
FIG. 3 shows a structure of a mobile network system according to an embodiment of the present invention.

### Detailed Description of the Embodiments

To make the technical solution of the present invention clearer, the following describes the embodiments of the present invention in detail with reference to accompanying drawings.

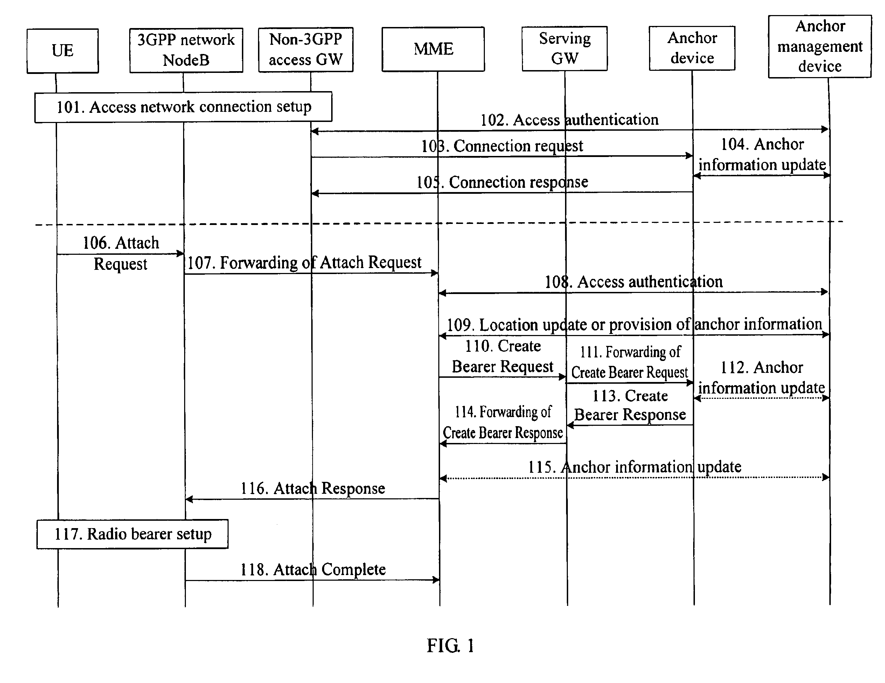

FIG. 1 is a signaling flowchart of an access network handover method according to the first embodiment of the present invention. In this embodiment, a UE is handed over from a non-3GPP access network to a 3GPP access network. The process of handover between the access networks includes the following steps:
Step 101: The UE detects signals of the non-3GPP access network, and connects to the non-3GPP access network.
Step 102: The non-3GPP access GW discovers that the UE needs to access the SAE core network, and sends a UE access authentication request to the anchor management device HSS or AAA server. The non-3GPP access network obtains UE subscription information in the authentication process.
Step 103: After the HSS or AAA server performs the access authentication for the UE successfully, the access GW, in place of the UE, uses a PMIP protocol to send a connection request to the anchor device PDN GW.

In this embodiment, the non-3GPP access GW sends a Binding Update message to the PDN GW. As a packet data gateway of the UE, the PDN GW is also an anchor device that moves between the non-3GPP network and the 3GPP network, supports multiple mobility management protocols and has anchor addresses corresponding to different mobility management protocols. For example, the PDN GW has an anchor address corresponding to the PMIP protocol.

Step 104: After receiving the connection request, the PDN GW provides the HSS or AAA server with the anchor addresses of the PDN GW, where the anchor addresses correspond to multiple mobility management protocols. According to the anchor addresses provided by the PDN GW, the HSS or AAA server updates the stored anchor information, and returns a response to the PDN GW, indicating that the anchor information is updated.

In this embodiment, the HSS or AAA server is an anchor management device, and can store and maintain the anchor information of the anchor device. The anchor information includes the anchor addresses of the anchor device, and the anchor addresses correspond to different mobility management protocols. The HSS or AAA server can also provide the MME, access GW, or UE with the anchor addresses of the anchor device currently used by the UE. The anchor addresses correspond to multiple mobility management protocols.

Step 105: The PDN GW returns a response to the access GW.

In this embodiment, the PDN GW returns a Binding Ack (binding acknowledgement) message to the access GW according to the Binding Update message sent by the access GW through a PMIP protocol.

Steps 101-105 above constitute a process that the UE accesses an SAE core network through a non-3GPP access network based on a PMIP protocol.

When the UE moves to a radio network covered by a 3GPP E-UTRAN, the signals of the non-3GPP access network in the current location are deteriorated, and the signals of the E-UTRAN are enhanced, and therefore, the UE needs to be handed over to the E-UTRAN. The 3GPP E-UTRAN uses GTP as a mobility management protocol.

Step 106: The UE sends an Attach Request to the NodeB of the E-UTRAN.

Step 107: The NodeB of the E-UTRAN forwards the Attach Request to an MME.

Step 108: The MME sends a UE access authentication request to the HSS or AAA server. The HSS or AAA server performs access authentication for the UE, and returns an authentication response to the MME.

Step 109: The MME sends a location update request to the HSS or AAA server, and registers the MME address with the HSS or AAA server. The HSS or AAA server delivers the UE subscription data to the MME, and sends the anchor address in the stored anchor information to the MME, where the anchor address corresponds to the GTP protocol.

Because the HSS or AAA server serves as an anchor management device which stores and maintains the anchor addresses corresponding to different mobility management protocols, the HSS or AAA server can send the stored anchor address corresponding to the GTP protocol to the MME.

The HSS or AAA server may provide multiple anchor addresses corresponding to multiple mobility management protocols (including the GTP mobility management protocol) for the MME, or provide only the anchor address corresponding to the GTP mobility management protocol (namely, a GTP-C address) for the MME.

Step 110: The MME selects a serving Gateway (GW) that supports the GTP protocol, sends a Create Bearer Request to the serving GW, and provides the anchor address corresponding to the GTP protocol for the serving GW.

If the HSS or AAA server provides only the anchor address corresponding to the GTP mobility management protocol for the MME, the MME provides only the anchor address corresponding to the GTP mobility management protocol (namely, a GTP-C address) for the serving GW.

If the HSS or AAA server provides multiple anchor addresses corresponding to multiple mobility management protocols (including the GTP mobility management protocol) for the MME, the MME may provide multiple anchor addresses corresponding to different mobility management protocols (including the GTP mobility management protocol) for the serving GW, or provide only the anchor address corresponding to the GTP mobility management protocol (namely, a GTP-C address) for the serving GW.

Step 111: The serving GW forwards the Create Bearer Request to the PDN GW according to the anchor address corresponding to the GTP protocol.

If the MME provides only the anchor address corresponding to the GTP mobility management protocol for the serving GW, the serving GW forwards the Create Bearer Request to the PDN GW according to the anchor address corresponding to the GTP mobility management protocol and provided by the MME.

If the MME provides multiple anchor addresses corresponding to multiple mobility management protocols (including the GTP mobility management protocol) for the serving GW, because the protocol supported by the serving GW is the GTP protocol, the serving GW selects the anchor address corresponding to the GTP mobility management protocol, and forwards the Create Bearer Request to the PDN GW.

Step 112: After receiving the Create Bearer Request, the PDN GW provides the anchor addresses of the anchor device currently used by the UE, where the anchor addresses correspond to multiple mobility management protocols; and the HSS or AAA server updates the stored anchor information of the anchor device.

Step 113: The PDN GW returns a Create Bearer Response to the serving GW. The message carries the anchor addresses of the anchor device currently used by the UE.

Step 114: The serving GW forwards the Create Bearer Response to the MME. The message carries the anchor addresses of the anchor device currently used by the UE.

Step 115: After receiving the Create Bearer Response, the MME sends the anchor addresses of the anchor device currently used by the UE to the HSS or AAA server. The HSS or AAA server updates the stored anchor information of the anchor device, and returns a response to the PDN GW, indicating that the anchor information is updated.

Step 116: The MME sends an Attach Response to the NodeB of the E-UTRAN.

Step 117: The NodeB of the E-UTRAN sets up a radio bearer with the UE.

Step 118: The NodeB of the E-UTRAN returns an Attach Complete response to the MME.

The anchor management device may obtain and update the anchor addresses corresponding to multiple mobility management protocols in this way: When the UE initiates network connection setup, the anchor device, MME or UE provides the anchor addresses of the anchor device currently used by the UE for the anchor management device, where the anchor addresses correspond to multiple mobility management protocols.

For example, in step 104, after the UE is authenticated for accessing the non-3GPP network, the anchor device PDN GW sends the anchor addresses of the anchor device currently used by the UE to the anchor management device HSS or AAA server for updating, where the anchor addresses correspond to multiple mobility management protocols.

In step 112, when the UE is handed over to the 3GPP network, in the process of setting up a bearer, the anchor device PDN GW sends the anchor addresses of the anchor device currently used by the UE to the anchor management device HSS or AAA server for updating, where the anchor addresses correspond to multiple mobility management protocols.

In step 115, when the UE is handed over to the 3GPP network, after the Create Bearer Request is sent, the MME sends the anchor addresses of the anchor device currently used by the UE to the anchor management device HSS or AAA server for updating, where the anchor addresses correspond to multiple mobility management protocols.

Through any one of step 104, step 112, and step 115 or any combination thereof, the anchor addresses (corresponding to multiple mobility management protocols) of the anchor device currently used by the UE may be provided for the anchor management device.

The anchor address is identifier information that can address the anchor, and may be an IP address or a domain name of the anchor.

When the anchor address is the IP address of the anchor device, the anchor address corresponding to a mobility management protocol may be an IP address and the corresponding protocol information, for example, GTP-IP1; the anchor addresses corresponding to multiple mobility management protocols may be mapping relations from multiple IP addresses to different mobility management protocols, for example, GTP-IP1, and PMIP-IP2; the anchor addresses corresponding to multiple mobility management protocols may be a mapping relation from one IP address to different mobility management protocols, for example, GTP-IP1, and PMIP-IP1.

When the anchor address is the domain name of the anchor device, the anchor address corresponding to a mobility management protocol may be a domain name and the corresponding protocol information such as GTP-sina.com, or a domain name that includes the protocol information such as sina.GTP.com; the anchor addresses corresponding to multiple mobility management protocols may be multiple domain names and the corresponding protocol information (for example, GTP-domain name 1, and PMIP-domain name 2), or multiple domain names that include diversified protocol information (for example, sina.GTP.com, and sina.PMIP.com), or domain names that include no protocol information (for example, sina.com). The protocol information needs to be added by the network element that selects the protocol (namely, the MME, access GW, or serving GW). For example, if the MME selects a GTP protocol, the domain name constructed at the time of resolving the domain name is sina.GTP.com.

In step 109, when the anchor addresses obtained by the MME, access GW, or serving GW correspond to multiple mobility management protocols, the MME, access GW, or serving GW may select a mobility management protocol according to their own configuration or policy, and use the anchor address corresponding to the selected mobility management protocol to set up a connection to the anchor device indicated by the anchor address, as detailed below:

When the anchor addresses corresponding to multiple mobility management protocols are multiple anchor IP addresses corresponding to multiple mobility management protocols, the MME, access GW or serving GW selects a mobility management protocol according to their own configuration or policy, uses the anchor IP address corresponding to the selected mobility management protocol as an IP address of the target anchor device, and sets up a connection to the anchor device indicated by the IP address.

When the anchor addresses corresponding to multiple mobility management protocols are anchor domain names corresponding to multiple mobility management protocols, the MME, access GW or serving GW may select a mobility management protocol according to their own configuration or policy, use the anchor domain name corresponding to the selected mobility management protocol (including the anchor domain name corresponding to the mobility management protocol and constructed in foregoing mode), obtain the anchor IP address through a domain name resolution service, use the anchor IP address as an IP address of the target anchor device, and set up a connection to the anchor device indicated by the IP address.

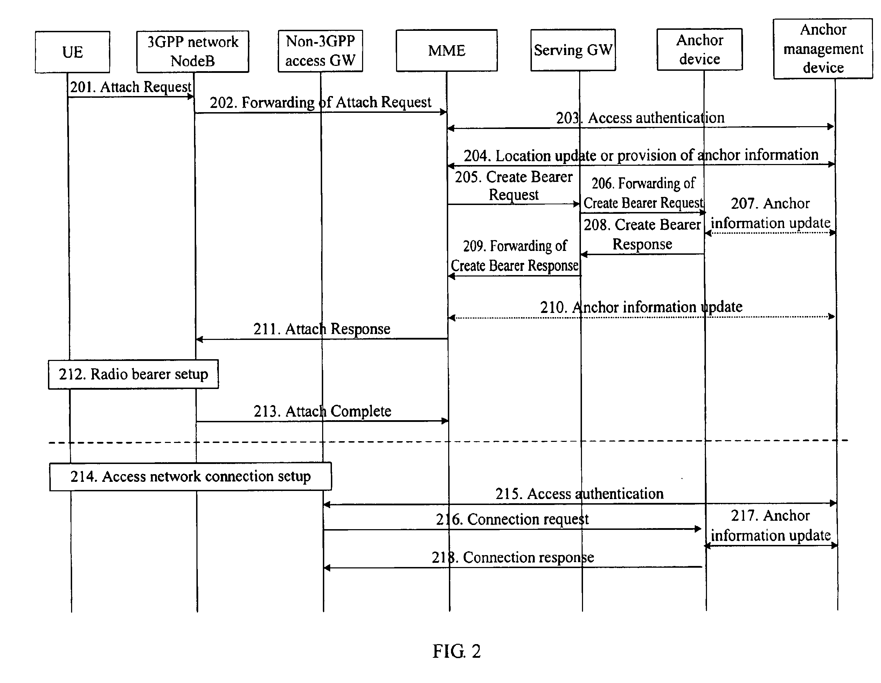

The domain name resolution service may be provided by the MME, access GW, or serving GW, or by a third-party Domain Name Server (DNS). FIG. 2 is a signaling flowchart of an access network handover method in the second embodiment of the present invention. In this embodiment, the UE is handed over from a 3GPP access network to a non-3GPP access network. The process of handover between the access networks includes the following steps:
Step 201: The UE sends an Attach Request to the NodeB of the 3GPP access network.

In this embodiment, the 3GPP access network is an E-UTRAN. The E-UTRAN uses GTP as a mobility management protocol.

Step 202: The NodeB of the 3GPP access network forwards the Attach Request to an MME.

Step 203: The MME sends a UE access authentication request to the HSS or AAA server. The HSS or AAA server performs access authentication for the UE, and returns an authentication response to the MME.

Step 204: The MME sends a location update request to the HSS or AAA server, and registers the MME address with the HSS or AAA server. The HSS or AAA server delivers the UE subscription data to the MME, and sends the stored anchor address corresponding to the GTP protocol to the MME.

In this embodiment, the HSS or AAA server is an anchor management device, and can store and maintain the anchor information of the anchor device. The anchor information includes the anchor addresses of the anchor device, and the anchor addresses correspond to different mobility management protocols. The HSS or AAA server can also provide the MME, access GW, or UE with the anchor addresses of the anchor device currently used by the UE. The anchor addresses correspond to multiple mobility management protocols.

The HSS or AAA server may provide multiple anchor addresses corresponding to multiple mobility management protocols (including the GTP mobility management protocol) for the MME, or provide only the anchor address corresponding to the GTP mobility management protocol (namely, a GTP-C address) for the MME. If the UE provides no anchor address when accessing the HSS or AAA server for the first time, the MME may select an anchor according to other information (such as an Access Point Name, APN) or policies (such as support of the GTP protocol).

Step 205: The MME selects a serving GW that supports the GTP protocol, sends a Create Bearer Request to the serving GW, and provides the anchor address corresponding to the GTP protocol for the serving GW, where the anchor address is allocated by the PDN GW.

If the HSS or AAA server provides only the anchor address corresponding to the GTP mobility management protocol for the MME, the MME provides only the anchor address corresponding to the GTP mobility management protocol (namely, a GTP-C address) for the serving GW.

If the HSS or AAA server provides multiple anchor addresses corresponding to multiple mobility management protocols (including the GTP mobility management protocol) for the MME, the MME may provide multiple anchor addresses corresponding to different mobility management protocols (including the GTP mobility management protocol) for the serving GW, or provide only the anchor address corresponding to the GTP mobility management protocol (namely, a GTP-C address) for the serving GW.

Step 206: The serving GW forwards the Create Bearer Request to the PDN GW according to the anchor address corresponding to the GTP protocol.

If the MME provides only the anchor address corresponding to the GTP mobility management protocol for the serving GW, the serving GW forwards the Create Bearer Request to the PDN GW according to the anchor address corresponding to the GTP mobility management protocol and provided by the MME.

If the MME provides multiple anchor addresses corresponding to multiple mobility management protocols (including the GTP mobility management protocol) for the serving GW, because the protocol supported by the serving GW is the GTP protocol, the serving GW selects the anchor address corresponding to the GTP mobility management protocol, and forwards the Create Bearer Request to the PDN GW.

Step 207: After receiving the Create Bearer Request, the PDN GW provides the anchor addresses of the anchor device currently used by the UE for the HSS or AAA server, where the anchor addresses correspond to multiple mobility management protocols; and the HSS or AAA server updates the stored anchor information of the anchor device.

Step 208: The PDN GW returns a Create Bearer Response to the serving GW. The message carries the anchor addresses of the anchor device currently used by the UE.

Step 209: The serving GW forwards the Create Bearer Response to the MME. The message carries the anchor addresses of the anchor device currently used by the UE.

Step 210: After receiving the Create Bearer Response, the MME forwards the anchor addresses of the anchor device currently used by the UE to the HSS or AAA server. The HSS or AAA server updates the stored anchor information of the anchor device, and returns a response to the PDN GW, indicating that the anchor information is updated.

Step 211: The MME sends an Attach Response to the NodeB of the 3GPP access network.

Step 212: The NodeB of the 3GPP access network sets up a radio bearer with the UE.

Step 213: The NodeB of the 3GPP access network returns an Attach Complete response to the MME.

Steps 201-213 above constitute a process of the UE accessing an SAE core network through a 3GPP access network based on a GTP protocol.

When the UE moves to a radio network covered by a non-3GPP E-UTRAN, the signals of the E-UTRAN in the current location are deteriorated, and the signals of the non-3GPP access network are enhanced, and therefore, the UE needs to be handed over to the non-3GPP access network. The non-3GPP access network uses PMIP as a mobility management protocol.

Step 214: The UE sets up a connection with the non-3GPP access network.

Step 215: The non-3GPP access network discovers that the UE needs to access the SAE core network, and sends a UE access authentication request to the HSS or AAA server. The non-3GPP access network obtains the UE subscription information in the authentication process. After performing access authentication for the UE successfully, the HSS or AAA server provides the anchor address (corresponding to the PMIP protocol) of the anchor device currently used by the UE for the access GW.

Step 216: The access GW, in place of the UE, uses the PMIP protocol to send a connection request to the PDN GW according to the anchor address corresponding to the PMIP protocol.

In this embodiment, the access GW sends a Binding Update message to the PDN GW. As a packet data gateway of the UE, the PDN GW is also an anchor device that moves between the non-3GPP network and the 3GPP network, supports multiple mobility management protocols and has anchor addresses corresponding to different mobility management protocols. For example, the PDN GW has an anchor address corresponding to the PMIP protocol.

Step 217: After receiving the connection request, the PDN GW provides the HSS or AAA server with the anchor addresses of the anchor device currently used by the UE, where the anchor addresses correspond to multiple mobility management protocols. According to the anchor addresses provided by the PDN GW, the HSS or AAA server updates the stored anchor information, and returns a response to the PDN GW, indicating that the anchor information is updated.

Step 218: The PDN GW returns a response to the access GW.

In this embodiment, the PDN GW returns a Binding Ack message to the access GW.

The anchor management device may obtain and update the anchor addresses corresponding to multiple mobility management protocols in this way: When the UE initiates network connection setup, the anchor device, MME or UE provides the anchor addresses of the anchor device currently used by the UE for the anchor management device, where the anchor addresses correspond to multiple mobility management protocols.

For example, in step 207, when the UE sends a Create Bearer Request in the 3GPP network, the anchor device PDN GW sends the anchor addresses of the anchor device currently used by the UE to the anchor management device HSS or AAA server for updating, where the anchor addresses correspond to multiple mobility management protocols.

In step 210, when the UE sends a Create Bearer Request in the 3GPP network, the MME sends the anchor addresses of the anchor device currently used by the UE to the anchor management device HSS or AAA server for updating, where the anchor addresses correspond to multiple mobility management protocols.

In step 217, after the UE is handed over to a non-3GPP network and is authenticated for accessing the non-3GPP network, the anchor device PDN GW sends the anchor addresses of the anchor device currently used by the UE to the anchor management device HSS or AAA server for updating, where the anchor addresses correspond to multiple mobility management protocols.

Through any one of step 207, step 210, and step 217 or any combination thereof, the anchor addresses (corresponding to multiple mobility management protocols) of the anchor device currently used by the UE may be provided for the anchor management device.

Another access network handover method is provided in an embodiment of the present invention. In the process of handover between access networks, an IP address is used as the anchor IP address of the mobility management protocol. The anchor device is on the interface corresponding to the IP address, monitors receiving of signaling of different mobility management protocols, and forwards the intercepted signaling to the physical mobility protocol processing module.

For example, the anchor device supports both GTP and MIP as a mobility management protocol, and uses an HA IP address as the anchor IP address.

After the UE uses the MIP protocol to set up a MIP connection successfully, the HA IP address is registered with the anchor management device, which is the same as a general MIP protocol processing process. When the UE moves to a network which uses GTP as a mobility management protocol, because the anchor IP address is an HA IP address which is different from the GTP-C address, the following actions are necessary: monitoring the User Datagram Protocol (UDP) port on the anchor IP address, filtering the signaling packets of the GTP-C, and forwarding the obtained signaling packets to the GTP protocol processing module.

In another example, the anchor device supports both GTP and MIP as a mobility management protocol, and uses a GTP-C IP address as the anchor IP address.

When the UE uses MIP as a mobility management protocol, because the GTP-C IP address is not an HA IP address, the following actions are necessary: monitoring on the GTP-C IP address to check whether any MIP registration message exists (through the UDP port in the case of IPv4, or through the IP mobile extension header in the case of IPv6), resolve the Home Address (HoA) of the packet or extend the carried information about the external network to be accessed, and forward the MIP packet to the corresponding HA. The address of the UE at one side of the tunnel from the user-plane UE to the HA (namely, the real HA address) may be carried in a MIP response and returned to the device at the other side of the MIP tunnel. When the UE moves to a network that uses GTP as a mobility management protocol, the control-plane anchor IP address is the GTP-C address, and the processing is the same as general GTP protocol processing.

The anchor address is identifier information that can address the anchor, and may be an IP address or a domain name of the anchor. The processing is almost the same as that of the first embodiment above, and is not described further.

Those skilled in the art are aware that all or part of the steps of the foregoing embodiments may be implemented by hardware instructed by a program. The program may be stored in a computer-readable storage medium. The storage medium may be a Read-Only Memory (ROM)/Random Access Memory (RAM), a magnetic disk, or a Compact Disk (CD).

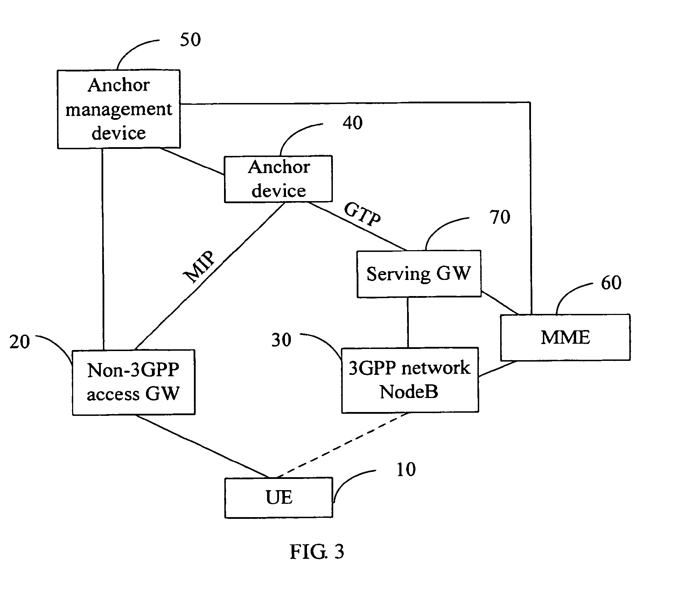

FIG. 3 shows a structure of a mobile network system according to an embodiment of the present invention.

As shown in FIG. 3, the mobile network system includes a UE 10, a non-3GPP access GW 20, a 3GPP access network NodeB 30, an anchor device 40, an anchor management device 50, an MME 60, and a serving GW 70. The anchor device may be a PDN GW, and the anchor management device may be an HSS or an AAA server.

In this embodiment, the UE is handed over from a non-3GPP network to a 3GPP network.

The specific process of the UE 10 accessing the non-3GPP network is as follows:
The UE 10 sends a UE access authentication request to the anchor management device 50 through the non-3GPP access GW 20. The anchor management device 50 performs access authentication for the UE 10.

After the access authentication, through the non-3GPP access GW 20, the UE 10 uses a MIP protocol to send a connection request to the anchor device 40. After receiving the connection request, the anchor device 40 provides the anchor management device 50 with the anchor address corresponding to the MIP protocol, and returns a connection response to the UE 10. The UE accesses the non-3GPP network successfully. According to the anchor address provided by the anchor device 40, the anchor management device 50 updates the stored anchor information. The anchor information includes at least one anchor address (corresponding to the mobility management protocol) of the anchor device.

The specific process of handover of the UE 10 to a 3GPP network is as follows:
The UE 10 sends an Attach Request to the 3GPP network NodeB 30. The 3GPP network NodeB 30 forwards the Attach Request to the MME 60, and the MME 60 sends a request for authenticating the UE 10 to the anchor management device 50.

After receiving the access authentication request, the anchor management device 50 sends the anchor address corresponding to the GTP protocol to the MME 60. According to the anchor address corresponding to the GTP protocol, the MME 60 sends a GTP-based Create Bearer Request to the anchor device 40 through the serving GW 70. After receiving the Create Bearer Request, the anchor device 40 provides the anchor management device 50 with the anchor address corresponding to the GTP protocol, and returns a Create Bearer Response to the MME 60. The UE 10 is attached to the 3GPP network successfully.

The anchor management device includes:
a receiving unit, adapted to receive anchor addresses of the anchor device currently used by the UE, where the anchor addresses correspond to mobility management protocols;
a storing unit, adapted to: store anchor information of the anchor device, and update the anchor information according to the anchor addresses that are received by the receiving unit and correspond to the mobility management protocols, where the anchor information includes at least one anchor address of the anchor device and the anchor address corresponds to at least one mobility management protocol;
a selecting unit, adapted to select an anchor address of the anchor device among the anchor addresses obtained by the receiving unit, where the selected anchor address corresponds to a mobility management protocol used by the network to which the UE is handed over; and
a sending unit, adapted to send the anchor address selected by the selecting unit to the access GW or MME.

The MME, access GW or serving GW is a mobile access device, and includes:
an obtaining unit, adapted to obtain anchor addresses of the anchor device currently used by the UE, where the anchor addresses correspond to mobility management protocols;
a selecting unit, adapted to select an anchor address of the anchor device among the anchor addresses obtained by the obtaining unit, where the selected anchor address corresponds to a mobility management protocol used by the network to which the UE is handed over; and
a connection setup unit, adapted to set up a connection by using the corresponding mobility management protocol according to the anchor address selected by the selecting unit.

The anchor address is identifier information that can address the anchor, and may be an IP address or a domain name of the anchor. The processing is almost the same as that of the first embodiment above, and is not described further.

Through the access network handover method, anchor management device, and mobile access device in the embodiments of the present invention, the anchor management device stores anchor addresses of the anchor device, and the anchor addresses correspond to multiple different mobility management protocols. When the UE is handed over from a network based on one mobility management protocol to a network based on another mobility management protocol, the anchor management device provides the UE with an anchor address of the anchor device, and this anchor address corresponds to another mobility management protocol. According to the anchor address, a connection from the UE to the access network is set up. Therefore, the continuity of the data service is still maintained when the UE is handed over between the access networks based on different mobility management protocols.

Detailed above are an access network handover method, an anchor management device, and a mobile access device under the present invention. Although the invention is described through several exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims.

## Claims

1. An access network handover method, comprising:
when a User Equipment, UE (10) moves from a first network (20) based on a first mobility management protocol to a second network (30) based on a second mobility management protocol, obtaining, by an access Gateway, GW (70), or a Mobility Management Entity, MME (60), an anchor address corresponding to the second mobility management protocol, wherein the anchor address corresponding to the second mobility management protocol indicates an anchor device (40) used by the UE (10) in the first network; and
setting up, by the access GW (70) or the MME (60), a connection to the anchor device (40) through using the second mobility management protocol according to the anchor address corresponding to the second mobility management protocol, **characterized in that** the anchor addresses corresponding to the mobility management protocols are the anchor domain names, and the step of setting up the connection from the access GW (70) or the MME (60) to the anchor device (40) indicated by the anchor address corresponding to the second mobility management protocol comprises: selecting, by the MME (60) or the access GW (70), a mobility management protocol as the second mobility management protocol according to their own configuration or policy, resolving the anchor domain name to obtain an anchor IP address corresponding to the second mobility management protocol, and setting up the connection to the anchor device (40) indicated by the IP address.

2. The access network handover method of claim 1, wherein:
the access GW (70) or the MME (60) obtains the anchor address corresponding to the second mobility management protocol from an anchor management device (50).

3. The access network handover method of claim 2, further comprising:
providing, by the anchor device (40), the MME (60) or the UE (10), anchor addresses of the anchor device (40) to the anchor management device (50) with, wherein the anchor addresses correspond to mobility management protocols and comprise the anchor address corresponding to the second mobility management protocol.

4. The access network handover method of claim 3, wherein the step of providing the anchor address corresponding to the second mobility management protocol for the anchor management device (50) by the anchor device (40) comprises:
providing, by the anchor device (40) anchor addresses of the anchor device (40) currently used by the UE (10) for the anchor management device (50) after access authentication is performed for the UE (10) or in a process of setting up a bearer, wherein the anchor addresses correspond to mobility management protocols; and
storing, by the anchor management device (50), the anchor addresses corresponding to the mobility management protocols from the anchor device (40).

5. The access network handover method of claim 3, wherein the step of providing the anchor address corresponding to the second mobility management protocol for the anchor management device (50) by the MME (60) comprises:
providing, by the MME (60), anchor addresses of the anchor device (40) currently used by the UE (10) for the anchor management device (50) in a process of setting up a bearer, wherein the anchor addresses correspond to mobility management protocols;
and
storing, by the anchor management device (50) the anchor addresses corresponding to the mobility management protocols from the MME (60).

6. The access network handover method of claim 5, wherein:
the anchor address provided by the MME (60) for the anchor management device (50) and corresponding to the second mobility management protocol is provided by the anchor device (40).

7. The access network handover method of claim 1, wherein:
when the anchor domain name corresponding to the second mobility management protocol does not comprise information about the second mobility management protocol, the method further comprises:
adding the information about the second mobility management protocol into the anchor domain name; and
resolving the anchor domain name that comprises the information about the second mobility management protocol to obtain the anchor IP address.

8. An anchor management device (50), comprising:
a receiving unit, adapted to receive anchor addresses of an anchor device (40) currently used by a User Equipment, UE (10), wherein the anchor addresses correspond to mobility management protocols and are the anchor domain names;
a storing unit, adapted to: record anchor information of the anchor device (40), and update the anchor information according to the anchor addresses that are received by the receiving unit and correspond to the mobility management protocols, wherein the anchor information carries the anchor addresses of the anchor device (40) and the anchor addresses correspond to multiple mobility management protocols; and
a sending unit, adapted to send anchor address corresponding to a mobility management protocol used by a network to which the UE (10) is handed over to a Mobility Management Entity ,MME (60), wherein the MME (60) selects a mobility management protocol as the mobility management protocol used by a network to which the UE (10) is handed over according to their own configuration or policy, resolves the anchor domain name to obtain an anchor IP address corresponding to the selecting mobility management protocol, and sets up the connection to the anchor device (40) indicated by the IP address.

9. The anchor management device (50) of claim 8 further comprising:
a selecting unit, adapted to select the anchor address of the anchor device (40) among the anchor addresses received by the receiving unit, wherein the selected anchor address corresponds to the mobility management protocol used by the network to which the UE (10) is handed over.

10. A mobile access device, comprising:
an obtaining unit, adapted to obtain anchor addresses of an anchor device (40) currently used by a User Equipment, UE (10) wherein the anchor addresses correspond to mobility management protocols and are the anchor domain names;
a selecting unit, adapted to select an anchor address of the anchor device (40) among the anchor addresses obtained by the obtaining unit, wherein the selected anchor address corresponds to a mobility management protocol used by a network to which the UE (10) is handed over; and
a connection setup unit, adapted to set up a connection by using the corresponding mobility management protocol according to the anchor address selected by the selecting unit,
wherein selecting an anchor address of the anchor device (40) among the anchor addresses obtained by the obtaining unit, and setting up a connection by using the corresponding mobility management protocol according to the anchor address selected by the selecting unit comprises: selecting a mobility management protocol as the mobility management protocol used by a network to which the UE (10) is handed over according to their own configuration or policy, resolving the anchor domain name to obtain an anchor IP address corresponding to the selecting mobility management protocol, and setting up the connection to the anchor device (40) indicated by the IP address.

11. The mobile access device of claim 10, wherein:
the mobile access device is a Mobility Management Entity, MME (60), an access Gateway, GW (20), or a serving GW (70).

12. An access network handover system, comprising: a first network based on a first mobility management protocol, a second network based on a second mobility management protocol, an access Gateway (20), GW, connected to the first network, and a Mobility Management Entity (60), MME, connected to the second network, wherein:
when a User Equipment (10), UE, moves from the first network to the second network, the MME (60) obtains an anchor address corresponding to the second mobility management protocol, and the anchor address corresponding to the second mobility management protocol indicates an anchor device (40) used by the UE (1) in the first network; and the MME (60) sets up a connection from the MME (60) to the anchor device (40) according to the anchor address corresponding to the second mobility management protocol, **characterized in that** the anchor addresses corresponding to the mobility management protocols are the anchor domain names, and the step of setting up the connection from the MME (60) to the anchor device (40) according to the anchor address corresponding to the second mobility management protocol comprises: selecting a mobility management protocol as the second mobility management protocol according to their own configuration or policy, resolving the anchor domain name to obtain an anchor IP address corresponding to the second mobility management protocol, and setting up the connection to the anchor device (40) indicated by the IP address.

13. The access network handover system of claim 12, further comprising an anchor management device (50), wherein:
the anchor management device (50) is adapted to receive and store anchor addresses of the anchor device (40) currently used by the UE (10), wherein the anchor addresses correspond to mobility management protocols; and
the MME (60) obtains the anchor address corresponding to the second mobility management protocol from the anchor management device (50).

## Patentansprüche

1. Zugangsnetz-Weiterreichungsverfahren, das die folgenden Schritte umfasst:
wenn sich ein Benutzergerät, UE (10), von einem ersten Netz (20) auf der Basis eines ersten Mobilitätsvenvaltungsprotokolls zu einem zweiten Netz (30) auf der Basis eines zweiten Mobilitätsverwaltungsprotokolls bewegt, erhält ein Zugangs-Gateway bzw. Zugangs-GW (70) oder eine Mobility Management Entity, MME (60), eine Ankeradresse, die dem zweiten Mobilitätsverwaltungsprotokoll entspricht, wobei die Ankeradresse, die dem zweiten Mobilitätsverrvaltungsprotokoll entspricht, eine Ankereinrichtung (40) angibt, die von dem UE (10) in dem ersten Netz verwendet wird; und
das Zugangs-GW (70) oder die MME (60) baut durch Verwendung des zweiten Mobilitätsverwaltungsprotokolls gemäß der Ankeradresse, die dem zweiten Mobilitätsvarwaltungsprotokoll entspricht, eine Verbindung mit der Ankereinnchtung (40) auf, **dadurch gekennzeichnet, dass** die Ankeradressen, die den Mobilitätsverwaltungsprotokollen entsprechen, die Ankerdomänennamen sind und der Schritt des Aufbauens der Verbindung von dem Zugangs-GW (70) oder der MME (60) mit der Ankereinrichtung (40), die durch die Ankeradresse angegeben wird, die dem zweiten Mobilitätsverwaltungsprotokoll entspricht, Folgendes umfasst: die MME (60) oder das Zugangs-GW (70) wählt ein Mobilitätsvenvaltungsprotokoll als das zweite Mobilitätsverwaltungsprotokoll gemäß ihrer bzw. seiner eigenen Konfiguration oder Richtlinie aus, der Ankerdomänenname wird aufgelöst, um eine Anker-IP-Adresse zu erhalten, die dem zweiten Mobilitätsverwaltungsprotokoll entspricht, und die Verbindung mit der durch die IP-Adresse angegebenen Ankereinrichtung (40) wird aufgebaut.

2. Zugangsnetz-Weiterreichungsverfahren nach Anspruch 1, wobei das Zugangs-GW (70) oder die MME (60) die Ankeradresse, die dem zweiten Mobilitätsverrvaltungsptotokoll entspricht, von einer Ankezverwaltungseinrichtung (50) erhält.

3. Zugangsnetz-Weiterreichungsverfahren nach Anspruch 2, ferner mit dem folgenden Schritt:
die Ankereinrichtung (40), die MME (60) oder das UE (10) stellt der Ankerverwaltungseinrichtung (50) Ankeradressen der Ankereinrichtung (40) bereit, wobei die Ankeradressett Mobilitätsverwaltungsprotokollen entsprechen und die Ankeradresse umfassen, die dem zweiten Mobilitätsverwaltungsprotokoll entspricht.

4. Zugangsnetz-Waitezreichungsverfahren nach Anspruch 3, wobei der Schritt des Bereitstellens der Ankeradresse, die dem zweiten Mobilitätsverwaltuugsprotokoll entspricht, für die Ankerverwattungseinriehtung (50) durch die Ankereinrichtung (40) Folgendes umfasst:
die Ankereinrichtung (40) stellt Ankeradressen der Ankereinrichtung (40), die gerade von dem UE (10) verwendet wird, für die Ankerverwaltungseinrichtung (50) bereit, nachdem Zugangsauthentifizierung für das UE (10) durchgeführt wird oder in einem Prozess des Aufbauens eines Trägers, wobei die Ankeradressen Mobilitätsvetwaltungsprotokollen entsprechen; und
die Ankerverwaltungseinzichtung (50) speichert die Ankeradressen, die den Mobilitätsverwaltungsprotokollen entsprechen, von der Ankereinrichtung (40).

5. Zugangsnetz-Weiterreichungsverfahren nach Anspruch 3, wobei der Schritt des Bereitstellens der Ankeradresse, die dem zweiten Mobilitätsverwaltungsprotokoll entspricht, für die Ankerverwaltungseinrichtung (50) durch die MME (60) Folgendes umfasst:
die MME (60) stellt Ankeradressen der Ankereinrichtung (40), die gerade von dem UE (10) verwendet wird, für die Ankerverwaltungseinrichtung (50) in einem Prozess des Aulbauens eines Trägers bereit, wobei die Ankeradressen Mobilitätsverwaltungsprotokollen entsprechen;
und
die Ankerverwaltungseinrichtung (50) speichert die Ankeradressen, die den Mobilitätsverwaltungsprotokollen entsprechen, von der MME (60).

6. Zugangsnetz-Weiterreichungsverfahren nach Anspruch 5, wobei die Ankeradresse, die durch die MME (60) für die Ankerverwaltungseinrichtung (50) bereitgestellt wird und dem zweiten Mobilitätsverwaltungsprotokoll entspricht, durch die Ankereinrichtung (40) bereitgestellt wird.

7. Zugangsnetz-Weiterreichungsverfahren nach Anspruch 1, wobei wenn der Ankerdomänenname, der dem zweiten Mobilitätsverwaltungsprotokoll entspricht, keine Informationen über das zweite Mobilitätsverwaltungsprotokoll umfasst, das Verfahren ferner Folgendes umfasst:
Hinzufügen der Informationen über das zweite Mobilitäisverwaltungsprotokoll in den Ankerdomänennamen; und
Auflösen des Ankerdomänennamens, der die Informationen über das zweite Mobilitätsverwaltungsprotokoll umfasst, um die Anker-IP-Adresse zu erhalten.

8. Ankerverwaltungseinrichtung (50), umfassend:
eine Empfangseinheit, die dafür ausgelegt ist, Ankeradressen einer Ankereinrichtung (40), die gerade von einem Benutzergerät bzw. UE (10) verwendet wird, zu empfangen, wobei die Ankeradressen Mobilititsverwaltungsprotokollen entsprechen und die Ankerdomänennamen sind;
eine Speichereinheit, die für Folgendes ausgelegt ist: Aufzeichnen von Ankerinformationen der Ankereinriehtung (40) und Aktualisieren der Ankerinformationen gemäß den Ankeradressen, die durch die Empfangseinheit empfangen werden und den Mobilitätsverwaltungsprotokollen entsprechen, wobei die Ankerinformationen die Ankeradressen der Ankereinrichtung (40) führen und die Ankeradressen mehreren Mobilitätsverwaltungsprotokollen entsprechen; und
eine Sendeeinheit, die dafür ausgelegt ist, eine Ankeradresse, die einem Mobilitätsverwaltungsprotokoll entspricht, das von einem Netz verwendet wird, an das das UE (10) weitergereicht wird, zu einer Mobility Management Entity MME (60) zu senden, wobei die MME (60) gemäß ihrer eigenen Konfiguration oder Richtlinie ein Mobilitätsverwaltungsprotokoll als das Mobilitätsverwaltungsprotokoll auswählt, das von einem Netz verwendet wird, an das das UE (10) weitergereicht wird, den Ankerdomänennamen auflöst, um eine Anker-IP-Adresse zu erhalten, die dem Auswahl-Mobilitätsverwaltungsprotokoll entspricht, und die Verbindung mit der durch die IP-Adresse angegebenen Ankereinrichtung (40) aufbaut.

9. Ankerverwaltungseinrichtung (50) nach Anspruch 8, ferner umfassend:
eine Auswahleinheit, die dafür ausgelegt ist, die Ankeradresse der Ankereinrichtung (40) unter den durch die Empfangseinheit empfangenen Ankeradressen auszuwählen, wobei die ausgewählte Ankeradresse dem Mobilitätsverwalturigsprotokoll entspricht, das von dem Netz verwendet wird, an das das UE (10) weitergereicht wird.

10. Mobil-Zugangseinrichtung, umfassend:
eine Erhalteeinheit, die dafür ausgelegt ist, Ankeradressen einer Ankereinriclttung (40), die gerade von einem Benutzergerät UE (10) verwendet wird, zu erhalten, wobei die Ankeradressen Mobilitätsverwaltungsprotokollen entsprechen und die Ankerdomänennamen sind;
eine Auswahleinheit, die dafür ausgelegt ist, eine Ankeradresse der Ankezeinrichtung (40) unter den durch die Erhalteeinheit erhaltenen Ankeradressen auszuwählen, wobei die ausgewählte Ankeradresse einem Mobilitätsverwaltungsptotokoll entspricht, das von einem Netz verwendet wird, an das das UE (10) weitergereicht wird; und
eine Verbindungsaufbaueinheit, die dafür ausgelegt ist, eine Verbindung durch Verwendung des entsprechenden Mobilitätsverwaltungsprotokolls gemäß der durch die Auswahleinheit ausgewählten Ankeradresse aufzubauen,
wobei das Auswählen einer Ankeradresse der Ankereinrichtung (40) unter den durch die Erhalteeinheit erhaltenen Ankeradressen und das Aufbauen einer Verbindung durch Verwendung des entsprechenden Mobilitätsverwaltungsprotokolls gemäß der durch die Auswahleinheit ausgewählten Ankeradresse Folgendes umfasst: Auswählen eines Mobilitätsverwaltungsprotokolls als das Mobilitätsverwaltungsprotokoll, das von einem Netz verwendet wird, an das das UE (10) weitergereicht wird, gemäß ihrer eigenen Konfiguration oder Richtlinie, Auflösen des Ankerdomänennamens, um eine Anker-IP-Adresse zu erhalten, die dem Auswahl-Mobilitätsverwaltungsprotokoll entspricht, und Aufbauen der Verbindung mit der durch die IP-Adresse angegebenen Ankereinrichtung (40).

11. Mobil-Zugangseinrichtung nach Anspruch 10, wobei die Mobil-Zugangseinrichtung eine Mobility Management Entity MME (60), ein Zugangs-Gateway GW (20) oder ein versorgendes GW (70) ist.

12. Zugartgsnetz-Weiterreichungssystem, umfassend: ein erstes Netz auf der Basis eines ersten Mobilitätsverwaltungsprotokolls, ein zweites Netz auf der Basis eines zweiten Mobilitätsverwaltungsprotokolls, ein Zugangs-Gateway (20) bzw. Zugangs-GW, das mit dem ersten Netz verbunden ist, und eine Mobility Management Entity (60) MME, die mit dem zweiten Netz verbunden ist, wobei
wenn sich ein Benutzergerät (10) UE von dem ersten Netz zu dem zweiten Netz bewegt, erhält die MME (60) eine Ankeradresse, die dem zweiten Mobilitätsverwaltungsprotokoll entspricht, und die Ankeradresse, die dem zweiten Mobilitätsverwaltungsprotokoll entspricht, gibt eine Ankereinrichtung (40) an, die von dem UE (10) in dem ersten Netz verwendet wird; und die MME (60) baut eine Verbindung von der MME (60) mit der Ankereinrichtung (40) gemäß der Ankeradresse, die dem zweiten Mobilitätsverwaltungsprotokoll entspricht, auf, **dadurch gekennzeichnet, dass** die Ankeradressen, die den Mobilitätsverwaltungsprotokollen entsprechen, die Ankerdomänennamen sind und der Schritt des Aufbauens der Verbindung von der MME (60) mit der Ankereinrichtung (40) gemäß der Ankeradresse, die dem zweiten Mobilitätsverwaltungsprotokoll entspricht, Folgendes umfasst: Auswählen eines Mobilitätsverwaltungsprotokolls als das zweite Mobilitätsverwaltungsprotokoll gemäß ihrer eigenen Konfiguration oder Richtlinie, Auflösen des Ankerdomänennamens, um eine Anker-IP-Adresse zu erhalten, die dem zweiten Mobilitätsverwaltungsprotokoll entspricht, und Aufbauen der Verbindung mit der durch die IP-Adresse angegebenen Ankereinrichtung (40).

13. Zugangsnetz-Weiterreichungssystem nach Anspruch 12, das ferner eine Ankerverwaltungseinrichtung (50) umfasst, wobei
die Ankerverwaltungseinrichtung (50) dafür ausgelegt ist, Ankeradressen der Ankereinrichtung (40), die gerade von dem UE (10) verwendet wird, zu empfangen und zu speichen, wobei die Ankeradressen Mobilitätsverwaltungsprotokollen entsprechen; und
die MME (60) die Ankeradresse, die dem zweiten Mobilitätsverwaltungsprotokoll entspricht, von der Ankerverwaltungseinrichtung (50) erhält.

## Revendications

1. Procédé de transfert de réseau d'accès, comprenant :
lorsqu'un Équipement d'Utilisateur, UE (10), se déplace d'un premier réseau (20) sur la base d'un premier protocole de gestion de mobilité à un second réseau (30) sur la base d'un second protocole de gestion de mobilité, l'obtention par une passerelle d'accès, GW (70), ou par une Entité de Gestion de Mobilité, MME (60), d'une adresse d'ancrage correspondant au second protocole de gestion de mobilité, l'adresse d'ancrage correspondant au second protocole de gestion de mobilité indiquant un dispositif d'ancrage (40) utilisé par l'UE (10) dans le premier réseau ; et
l'établissement, par la passerelle d'accès GW (70) ou par l'entité MME (60), d'une connexion au dispositif d'ancrage (40) en utilisant le second protocole de gestion de mobilité conformément à l'adresse d'ancrage correspondant au second protocole de gestion de mobilité, **caractérisé en ce que** les adresses d'ancrage correspondant aux protocoles de gestion de mobilité sont les noms de domaines d'ancrage, et l'étape d'établissement de la connexion de la passerelle d'accès GW (70) ou de l'entité MME (60) au dispositif d'ancrage (40) indiqué par l'adresse d'ancrage correspondant au second protocole de gestion de mobilité comprend : la sélection, par l'entité MME (60) ou par la passerelle d'accès GW (70), d'un protocole de gestion de mobilité en tant que second protocole de gestion de mobilité conformément à sa configuration ou politique propre, la résolution du nom du domaine d'ancrage afin d'obtenir une adresse IP d'ancrage correspondant au second protocole de gestion de mobilité, et l'établissement de la connexion au dispositif d'ancrage (40) indiqué par l'adresse IP.

2. Procédé de transfert de réseau d'accès selon la revendication 1, dans lequel :
la passerelle d'accès GW (70) ou l'entité MME (60) obtient l'adresse d'ancrage correspondant au second protocole de gestion de mobilité d'un dispositif de gestion d'ancrage (50).

3. Procédé de transfert de réseau d'accès selon la revendication 2, comprenant en outre :
la fourniture, par le dispositif d'ancrage (40), par l'entité MME (60) ou par l'UE (10), d'adresses d'ancrage du dispositif d'ancrage (40) au dispositif de gestion d'ancrage (50), les adresses d'ancrage correspondant à des protocoles de gestion de mobilité et comprenant l'adresse d'ancrage correspondant au second protocole de gestion de mobilité.

4. Procédé de transfert de réseau d'accès selon la revendication 3, dans lequel l'étape de fourniture de l'adresse d'ancrage correspondant au second protocole de gestion de mobilité pour le dispositif de gestion d'ancrage (50) par le dispositif d'ancrage (40) comprend :
la fourniture, par le dispositif d'ancrage (40), d'adresses d'ancrage du dispositif d'ancrage (40) en cours d'utilisation par l'UE (10) pour le dispositif de gestion d'ancrage (50), après qu'une authentification d'accès a été effectuée pour l'UE (10) ou
lors d'un processus d'établissement d'un canal porteur, les adresses d'ancrage correspondant à des protocoles de gestion de mobilité ; et
le stockage, par le dispositif de gestion d'ancrage (50), des adresses d'ancrage correspondant aux protocoles de gestion de mobilité provenant du dispositif d'ancrage (40).

5. Procédé de transfert de réseau d'accès selon la revendication 3, dans lequel l'étape de fourniture de l'adresse d'ancrage correspondant au second protocole de gestion de mobilité, pour le dispositif de gestion d'ancrage (50) par l'entité MME (60) comprend :
la fourniture, par l'entité MME (60), d'adresses d'ancrage du dispositif d'ancrage (40) en cours d'utilisation par l'UE (10) pour le dispositif de gestion d'ancrage (50), lors d'un processus d'établissement d'un canal porteur, les adresses d'ancrage correspondant à des protocoles de gestion de mobilité ;
et
le stockage, par le dispositif de gestion d'ancrage (50), des adresses d'ancrage correspondant aux protocoles de gestion de mobilité provenant de l'entité MME (60).

6. Procédé de transfert de réseau d'accès selon la revendication 5, dans lequel :
l'adresse d'ancrage fournie par l'entité MME (60) pour le dispositif de gestion d'ancrage (50) et correspondant au second protocole de gestion de mobilité est fournie par le dispositif d'ancrage (40).

7. Procédé de transfert de réseau d'accès selon la revendication 1, dans lequel :
lorsque le nom de domaine d'ancrage correspondant au second protocole de gestion de mobilité ne comprend pas d'informations concernant le second protocole de gestion de mobilité, le procédé comprend en outre :
l'ajout des informations concernant le second protocole de gestion de mobilité au nom de domaine d'ancrage ; et
la résolution du nom de domaine d'ancrage qui comprend les informations concernant le second protocole de gestion de mobilité afin d'obtenir l'adresse IP d'ancrage.

8. Dispositif de gestion d'ancrage (50), comprenant :
une unité de réception, apte à recevoir des adresses d'ancrage d'un dispositif d'ancrage (40) en cours d'utilisation par un Équipement d'Uitilisateur, UE (10), les adresses d'ancrage correspondant à des protocoles de gestion de mobilité et étant les noms de domaines d'ancrage;
une unité de stockage, apte à: enregistrer des informations d'ancrage du dispositif d'ancrage (40), et à mettre à jour les informations d'ancrage conformément aux adresses d'ancrage qui sont reçues par l'unité de réception et correspondent aux protocoles de gestion de mobilité, les informations d'ancrage acheminant les adresses d'ancrage du dispositif d'ancrage (40) et les adresses d'ancrage correspondant à de multiples protocoles de gestion de mobilité ; et
une unité d'envoi, apte à envoyer une adresse d'ancrage correspondant à un protocole de gestion de mobilité utilisé par un réseau vers lequel l'UE (10) est transféré, à une Entité de Gestion de Mobilité, MME (60), l'entité MME (60) sélectionnant un protocole de gestion de mobilité en tant que protocole de gestion de mobilité utilisé par un réseau vers lequel l'UE (10) est transféré conformément à sa configuration ou politique propre, résolvant le nom de domaine d'ancrage afin d'obtenir une adresse IP d'ancrage correspondant au protocole de gestion de mobilité sélectionné, et établissant la connexion au dispositif d'ancrage (40) indique par l'adresse IP.

9. Dispositif de gestion d'ancrage (50) selon la revendication 8, comprenant en outre :
une unité de sélection, apte à sélectionner l'adresse d'ancrage du dispositif d'ancrage (40) parmi les adresses d'ancrage reçues par l'unité de réception, l'adresse d'encrage sélectionnée correspondant au protocole de gestion de mobilité utilisé par le réseau vers lequel l'UE (10) est transféré.

10. Dispositif d'accès mobile, comprenant :
une unité d'obtention, apte à obtenir des adresses d'ancrage d'un dispositif d'ancrage (40) en cours d'utilisation par un Équipement d'Utilisateur, UE (10), les adresses d'ancrage correspondant à des protocoles de gestion de mobilité et étant les noms de domaines d'ancrage;
une unité de sélection, apte à sélectionner une adresse d'ancrage du dispositif d'ancrage (40) parmi les adresses d'ancrage obtenues par l'unité d'obtention, l'adresse d'ancrage sélectionnée correspondant à un protocole de gestion de mobilité utilisé par un réseau vers lequel l'UE (10) est transféré ; et
une unité d'établissement de connexion, apte à établir une connexion en utilisant le protocole de gestion de mobilité correspondant conformément à l'adresse d'ancrage sélectionnée par l'unité de sélection,
dans lequel la sélection d'une adresse d'ancrage du dispositif d'ancrage (40) parmi les adresses d'ancrage obtenues par l'unité d'obtention, et l'établissement d'une connexion en utilisant le protocole de gestion de mobilité correspondant conformément à l'adresse d'ancrage sélectionnée par l'unité de sélection comprend : la sélection d'un protocole de gestion de mobilité en tant que protocole de gestion de mobilité utilisé par un réseau vers lequel l'UE (10) est transféré conformément à sa configuration ou politique propre, la résolution du nom de domaine d'ancrage afin d'obtenir une adresse IP d'ancrage correspondant au protocole de gestion de mobilité sélectionné; et l'établissement de la connexion au dispositif d'ancrage (40) indiqué par l'adresse IP.

11. Dispositif d'accès mobile selon la revendication 10, dans lequel :
le dispositif d'accès mobile est une Entité de Gestion de Mobilité, MME (60), une Passerelle d'Accès, GW (20), ou une Passerelle GW de desserte (70).

12. Système de transfert de réseau d'accès, comprenant : un premier réseau basé sur un premier protocole de gestion de mobilité, un second réseau basé sur un second protocole de gestion de mobilité, une Passerelle d'Accès (20), GW, connectée au premier réseau, et une Entité de Gestion de Mobilité, MME (60), connectée au second réseau, dans lequel :
lorsqu'un Équipement d'Utilisateur, UE (10), se déplace du premier réseau au second réseau, l'entité MME (60) obtient une adresse d'ancrage correspondant au second protocole de gestion de mobilité, et l'adresse d'ancrage correspondant au second protocole de gestion de mobilité indique un dispositif d'ancrage (40) utilisé par l'UE (10) dans le premier réseau ; et l'entité MME (60) établit une connexion de l'entité MME (60) au dispositif d'ancrage (40) conformément à l'adresse d'ancrage correspondant au second protocole de gestion de mobilité, **caractérisé en ce que** les adresses d'ancrage correspondant aux protocoles de gestion de mobilité sont les noms de domaines d'ancrage, et l'étape d'établissement de la connexion de l'entité MME (60) au dispositif d'ancrage (40) conformément à l'adresse d'ancrage correspondant au second protocole de gestion de mobilité comprend : la sélection d'un protocole de gestion de mobilité en tant que second protocole de gestion de mobilité conformément à sa configuration ou politique propre, la résolution du nom du domaine d'ancrage afin d'obtenir une adresse IP d'ancrage correspondant au second protocole de gestion de mobilité, et l'établissement de la connexion au dispositif d'ancrage (40) indiqué par l'adresse IP.

13. Système de transfert de réseau d'accès selon la revendication 12, comprenant en outre un dispositif de gestion d'ancrage (50), dans lequel :
le dispositif de gestion d'ancrage (50) est apte à recevoir et à stocker des adresses d'ancrage du dispositif d'ancrage (40) en cours d'utilisation par l'UE (10), les adresses d'ancrage correspondant à des protocoles de gestion de mobilité ; et
l'entité MME (60) obtient l'adresse d'ancrage correspondant au second protocole de gestion de mobilité en provenance du dispositif de gestion d'ancrage (50).
